## Europäisches Patentamt

## European Patent Office

## Office européen des brevets

(11) Veröffentlichungsnummer: **0 153 671**
**B1**

# EUROPÄISCHE PATENTSCHRIFT

(45) Veröffentlichungstag der Patentschrift:
**23.11.88**

(51) Int. Cl.⁴: **C 01 B 17/66**

(21) Anmeldenummer: **85101667.5**

(22) Anmeldetag: **15.02.85**

(54) Stabilisierte, Wasser enthaltende, alkalisch eingestellte Natriumdithionitzubereitungen.

(30) Priorität: **22.02.84 DE 3406322**

(43) Veröffentlichungstag der Anmeldung:
**04.09.85 Patentblatt 85/36**

(45) Bekanntmachung des Hinweises auf die Patenterteilung:
**23.11.88 Patentblatt 88/47**

(84) Benannte Vertragsstaaten:
**BE CH DE FR GB IT LI NL SE**

(56) Entgegenhaltungen:
**DE-C-453 409**
**US-A-3 054 658**
**US-A-3 773 679**
**US-A-3 839 217**
**US-A-3 985 674**
**US-A-4 100 098**

(73) Patentinhaber: **BASF Aktiengesellschaft, Carl-Bosch- Strasse 38, D-6700 Ludwigshafen (DE)**

(72) Erfinder: **Appl, Max, Dr., Berliner Strasse 12, D-6701 Dannstadt- Schauernheim (DE)**
Erfinder: **Goesele, Eilhelm, Dr., Goesele, Wilhelm, Dr., D-6706 Wachenheim (DE)**
Erfinder: **Melzer, Jaroslav, Dipl.- Ing., Kirchenstrasse 116, D-6700 Ludwigshafen (DE)**
Erfinder: **Schreiner, Siegfried, Dr., Mohnstrasse 39, D-6700 Ludwigshafen (DE)**
Erfinder: **Treiber, Gert, Dr., Richard- Wagner- Strasse 63, D-6520 Worms 1 (DE)**

**0 153 671**

**Beschreibung**

Vorliegende Erfindung betrifft Wasser enthaltende Natriumdithionitzubereitungen, die nicht zur Selbstentzündung neigen und die darüber hinaus bei der Verwendung als Reduktions- oder Bleichmittel, z. B. in der Holzschliffbleiche, leicht handhabbar und dosierbar sind.

Natriumdithionit, das häufig auch als Natriumhydrosulfit bezeichnet wird, ist im Sinne der Transportvorschriften in die Klasse der selbstentzündlichen Gefahrengüter einzureihen. Es wird in großen Mengen in der chemischen Technik eingesetzt, z. B. in der Papierindustrie zum Bleichen von Holzschliff, oder in der Textilindustrie als Reduktionsmittel beim Färben.

Wasserfreies Natriumdithionit ist zwar in geschlossenen Gebinden weitgehend lagerbeständig, es zersetzt sich jedoch sehr rasch bei der Einwirkung von Wasser oder Feuchtigkeit. Auch bei Zutritt von schon geringen Mengen Wassers im Bereich von 3 bis 10 Gew.-% wird durch Hydratation eine Erwärmung und Zersetzung des Produktes bewirkt. Bei dieser Zersetzung wird unter weiterer Wärmeentwicklung Schwefel frei, der bei Temperaturen über 210°C mit dem im Kristallhaufwerk vorhandenen Luftsauerstoff reagiert und unter Flammenbildung abbrennt. Bei einem solchen Brand entwickeln sich erhebliche Mengen an Schwefeldioxid, durch das die Transportgebinde zum Bersten gebracht werden und dadurch der Zutritt von weiterem Luftsauerstoff ermöglicht wird.

Zur Verminderung dieser Risiken hat man daher häufig das stabilere Zinkdithionit eingesetzt, jedoch wird die Verwendung dieses Produktes aus Gründen des Umweltschutzes in zunehmendem Maße zurückgedrängt.

Um die Zersetzlichkeit und Selbstentzündlichkeit des Natriumdithionits zu verringern ist es bekannt, dieses durch Verschnitt mit inerten Substanzen zu verdünnen. Als Verdünnungsmittel sind bereits die verschiedensten Substanzen bekannt geworden, wie alkalisch reagierende Salze, z.B. Natriumcarbonat, Natriumphosphat, Natriumpolyosphate, Harnstoff oder trockene Pulver aus leicht löslichen sythetischen Polymerisaten (DE-B 1 220 399 und DE-B-1 226 992).

In der US-C-1 810 663 werden des weiteren natriumdithionithaltige Zubereitungen beschrieben, bei denen das Natriumdithionit mit einer im wesentlichen wasserunlöslichen Substanz umhüllt ist. Als solche Substanzen werden Öle, Fette und Wachse genannt. Zusätzlich hierzu ist in die Umhüllung ein Emulgiermittel eingearbeitet, das die Aufgabe hat, beim Lösen in Wasser die umhüllende Substanz zu emulgieren.

In der GB-A-695 375 werden flüssige Ester mit niedriger Flüchtigkeit, die sich von Alkoholen mit mehr als 5 C-Atomen ableiten, als Umhüllungsmittel angegeben. Diese Ester sollen nur in solchen Mengen angewandt werden, daß die Fließbarkeit des Dithionits nicht wesentlich beeinträchtigt wird.

Alle auf dem Markt befindlichen, stabilisierten, festen Natriumdithionit-Zubereitungen konnten das Sicherheitsbedürfnis der verarbeitenden Industrie nicht vollständig zufriedenstellen, abgesehen davon, daß sich diese pulverförmigen Produkte nur schwierig handhaben lassen. Die Dosierung dieser Produkte wird beeinträchtigt durch die unterschiedliche Rieselfähigkeit von in den Produkten enthaltenen Fein- und Grobanteilen. Die Feinanteile erschweren darüber hinaus die Verarbeitung dieser Produkte durch die lästige Staubentwicklung, die durch weitere Zusatzstoffe unterdrückt oder durch zusätzliche apparative Einrichtungen eliminiert werden muß. Beides bedeutet für die Verarbeitung solcher pulverförmigen Zubereitungen eine Erschwerung.

Aus diesen Gründen wird in den letzten Jahren in zunehmendem Maße Natriumdithionit in der Weise erzeugt, daß der Anwender selbst wässerige Lösungen von Natriumdithionit durch Umsetzung von Natriumborhydrid, Natronlauge und Schwefeldioxid erzeugt. Diese Methode ist aber durch eine umständliche Nebenfabrikation eines Einsatzstoffes beim Anwender belastet.

Die oben beschriebenen Nachteile der pulverförmigen Natriumdithionitzubereitungen können teilweise umgangen werden durch den Einsatz wässeriger Natriumdithionit-Lösungen. Sie haben jedoch den Nachteil, daß sie nur innerhalb eines begrenzten Zeitraumes von etwa 4 Wochen ab der Herstellung der Lösung stabil sind, was aber nur durch Kühlen auf Temperaturen unter 10°C, Luftausschluß und Alkalischstellen der Lösung erreicht wird. Zudem machen sich die im Vergleich zum Pulver erhöhten Transportkosten bei größeren Distanzen immer stärker bemerkbar. Aus diesen Grunde können solche Lösungen nur bei relativ geringen Entfernungen zwischen Hersteller und Anwender eingesetzt werden.

In der US-Patentschrift 3 839 217 werden Dispersionen, die ein wasserlösliches Dithionit enthalten, beschrieben. Diese Dispersionen enthalten 20 bis 45 Gew.-% Dithionit und besitzen eine Viskosität von etwa 50.000 centipoise. Neben dem Dithionit enthalten sie eine Flüssigkeit, die die Zersetzung des Dithionits nicht katalysiert und die eine Substanz, z.B. ein wasserlösliches Salz, enthält, die die Auflösung des Dithionits in der Flüssigkeit unterdrückt.

Es sind auch Natriumdithionitzubereitungen vorgeschlagen worden, die organische Flüssigkeiten in einer solchen Menge enthalten, daß sie die Konsistenz einer pumpfähigen Paste aufweisen. Diese Pasten haben gegenüber den festen Natriumdithionitzubereitungen den Vorteil, daß sie einerseits gegenüber der Einwirkung von Wasser und Luftsauerstoff stabiler sind als die vorher gebräuchlichen pulverförmigen Abmischungen und andererseits gegenüber diesen Abmischungen verarbeitungstechnische Vorteile wegen ihrer leichteren Förderbarkeit und Dosierbarkeit aufweisen.

Es wurde nun gefunden, daß man bei Natriumdithionitzubereitungen auf organische Flüssigkeiten zumindest teilweise oder ganz verzichten und auf Wasser als flüssige Phase zurückgreifen kann.

Gegenstand der Erfindung sind dementsprechend Wasser enthaltende, alkalisch eingestellte Natriumdithionitzubereitungen, die dadurch gekennzeichnet sind, daß die die Konsistenz einer pumpfähigen

2

Paste aufweisenden Zubereitungen einen pH-Wert von > 10, einen Natriumdithionitgehalt von 60 bis 70 Gew.-% und einen Wassergehalt von 15 bis 30 Gew.-% aufweisen, wobei der Gesamtgehalt an diesen beiden Komponenten in der Zubereitung maximal 90 Gew.-% nicht überschreitet und daß die Zubereitungen ein in Wasser gelöstes, gegenüber Natriumdithionit inertes Natrium- und/oder Kaliumsalz enthalten, das eine Löslichkeit in Wasser von über 500 g/l bei 20° aufweist, mit der Maßgabe, daß die Mindestkonzentration des in der wäßrigen Phase gelösten Salzes 200 g/l beträgt.

Die Viskositäten der erfindungsgemäßen Pasten betragen von 0,1 bis 1500, vorzugsweise von 0,5 bis 100 Pa.s (bestimmt im Couette-Rheometer bei 20°C und einer Schergeschwindigkeit von 10 s⁻¹, vgl. Praktische Rheologie der Kunststoffschmelzen und -lösungen, M.H. Pahl VDI-Verlag, Buch Nr. ISBN 3-18-404097-6). Wasserhaltige Natriumdithionitpasten dieser Viskosität lassen sich bei ihrer Anwendung problemlos mit Pumpen bzw. Dosiereinrichtungen für die Manipulation von pastenförmigen Substanzen fördern und dosieren.

Erfindungsgemäß enthalten die wasserhaltigen Natriumdithionitpasten neben Wasser gegenüber Natriumdithionitinerte, in der wäßrigen Phase leicht lösliche Natrium- und/oder Kaliumsalze, d.h. Salze, die in Wasser eine Löslichkeit von mindestens 500 g pro Liter aufweisen. Solche Salze sind z. B. Natriumformiat, Natriumacetat, das Natriumsalz der Oximethansulfinsäure, Kaliumcarbonat und Kaliumsulfit. Besonders bevorzugt sind Natriumformiat und das Natriumsalz der Oximethansulfinsäure, das unter dem Handelsnamen Rongalit bekannt ist.

Die erfindungsgemäßen Natriumdithionitzubereitungen enthalten demzufolge neben Natriumdithionit und Wasser die genannten Salze sowie in geringen Mengen von etwa 1 % Natron- oder Kalilauge um die ganze Zubereitung alkalisch zu stellen, wobei der pH-Wert zweckmäßig > 10 liegen sollte.

Der Anteil an Dithionit in den erfindungsgemäßen Pasten kann von 60 bis 70 Gew.-% und derjenige des Wassers von 15 bis 30 Gew.-% schwanken, wobei der Gesamtgehalt an diesen beiden Komponenten in der Zubereitung maximal 90 Gew.-% nicht überschreitet. Der auf 100 % verbleibende Rest verteilt sich auf die löslichen Salze sowie die genannten Hydroxide sowie gegebenenfalls an sich bekannte Stabilisatoren für Natriumdithionit, z. B. das Natriumsalz der Ethylendiamintetraessigsäure.

Ein Teil des in der erfindungsgemäßen Zubereitung enthaltenen Wassers kann auch durch eine mit Wasser mischbare organische Flüssigkeit ersetzt werden, insbesondere durch Alkohole wie Methanol, Ethanol, Glykol und Glycerin.

Die Menge der in der wäßrigen Phase enthaltenen Salze sollte mindestens 200 g/l betragen, wobei bei wäßrigen Phasen, die keine organische Flüssigkeit enthalten der Anteil an Salzen zweckmäßig mindestens 300 g/l beträgt. Nach oben ist der Gehalt begrenzt durch die Sättigungskonzentration des jeweiligen Salzes. Ober diesen Sättigungswert in der erfindungsgemäßen Zubereitung enthaltene Salze, die also dementsprechend In ungelöster Form vorliegen, beeinträchtigen allerdings die Zubereitungen nicht, sind aber auch nicht erstrebenswert.

Wesentlich ist, daß in den erfindungsgemäßen Zubereitungen die zur Anwendung kommenden leicht löslichen Salze eine Mindestlöslichkeit von 500 g/l in Wasser aufweisen, obwohl die tatsächliche Konzentration in der wäßrigen Phase diesen Wert nicht erreichen muß, sondern, wie oben dargelegt, sogar erheblich darunter liegen kann. So wäre es z. B. denkbar, daß Natriumchlorid, das eine Löslichkeit von ca. 360 g/l Wasser bei 20°C aufweist, eingesetzt werden kann, da mit ihm die geforderten Mindestlöslichkeiten über 200 bzw. 300 g/l überschritten werden. Überraschenderweise zeigt jedoch eine solche mit Natriumchlorid versetzte Paste gegenüber einer salzfreien Paste praktisch keine verbesserte Stabilität. Beim Einsatz der sehr gut löslichen Salze wurde festgestellt, daß das Natriumdithionit in den erfindungsgemäßen Zubereitungen in Form wasserfreier Kristalle vorliegt, während bei weniger wasserlöslichen Salzen, z. B. NaCl, das Dithionit als Dihydrat vorliegt, das offensichtlich wesentlich weniger stabil ist.

Bei der Herstellung der erfindungsgemäßen Zubereitungen wird zunächst das Salz in der erforderlichen Wassermenge gelöst und anschließend in die erhaltene Lösung das Natriumdithionit eingearbeitet, die Paste alkalisch gestellt und gegebenenfalls mit weiteren Stabilisatoren und Dispergierhilfsmitteln versetzt.

Die erfindungsgemäßen Pasten können nach einer gewissen Lagerzeit oder auch durch Rütteln beim Transport sich u.U. teilweise entmischen, was sich durch Ausscheiden einer geringen Menge der Flüssigkomponente bemerkbar macht. Die als dünne Schicht auf der Paste aufschwimmende Flüssigkeit kann jedoch ohne Schwierigkeiten mechanisch wieder in die Paste eingearbeitet werden.

Um diesen Absetzeffekt zu verhindern, ist es aber einfacher, der Paste ein Dispergierhilfsmittel oder ein Verdickungsmittel in geringen Mengen von z. B. bis zu ca. 2 Gew.-% zuzusetzen.

Bei Zutritt von geringen Wassermengen, die bei pulverförmigen Produkten eine rasche Zersetzung und Selbstentzündung bewirken, tritt keinerlei Reaktion ein. Selbst beim Erwärmen auf z. B. 80°C konnten keine gefährlichen Zersetzungserscheinungen des in der Paste enthaltenen Natriumdithionits registriert werden.

Auf die günstigen Eigenschaften bei der Verarbeitung der Pasten aufgrund ihrer guten Förderbarkeit und Dosierbarkeit ist weiter oben schon hingewiesen worden.

Die erfindungsgemäßen Pasten eignen sich als Reduktionsmittel und können überall dort eingesetzt werden, wo auch pulverförmige Natriumhydrosulfit enthaltende pulverförmige Zubereitungen eingesetzt werden, z. B. in der Holzschliffbleiche und als Reduktionsmittel, z. B. in der Küpenfärberei.

### Beispiele

Wie in der folgenden Tabelle veranschaulicht, werden jeweils in 1 l Wasser bzw. Wasser-Alkohol-Mischungen die dort aufgeführten Salze in den angeführten Mengen gelöst. In die Lösungen werden jeweils 0,1 Gew.-% des Natriumsalzes der Ethylendiaminotetraessigsäure zugesetzt und die Lösung durch Zugabe von NaOH auf einen pH-Wert von 13 eingestellt. Anschließend wird in die Lösung unter Stickstoff die jeweils in der Tabelle aufgeführte Natriumdithionitmenge eingearbeitet.

### Tabelle

| Nr. | Flüssige Phase | Salz | Menge (g) flüss. Phase | Salz | Hydrosulfit 88 % g | Viskosität der Paste (Pa.s) | Na$_2$S$_2$O$_4$-Gehalt nach 3 Wochen in % des Ausgangswertes |
|---|---|---|---|---|---|---|---|
| 1 | H$_2$O | - | 200 | - | 730 | ca. 2 | 65 |
| 2 | " | NaCl | 206 | 94 | 680 | ca. 3 | 68 |
| 3 | " | NaCOOH | 162 | 138 | 663 | ca. 1,5 | 98 |
| 4 | " | " | 162 | 94 | 680 | ca. 2 | 95 |
| 5 | " | CH$_3$COONa | 150 | 150 | 660 | ca. 4 | 94 |
| 6 | " | CH$_2$OH.SO$_2$Na | 150 | 150 | 660 | ca. 4 | 92 |
| 7 | " | K$_2$SO$_3$ | 160 | 150 | 720 | ca. 100 | 92 |
| 8 | H$_2$O/CH$_3$OH = 4/1 | NaCOOH | 180 | 120 | 740 | ca. 500 | 98 |
| 9 | " | CH$_2$OH-SO$_2$Na | 180 | 120 | 680 | ca. 10 | 95 |
| 10 | H$_2$O/C$_2$H$_5$OH = 4/1 | NaCOOH | 180 | 120 | 680 | ca. 10 | 98 |
| 11 | H$_2$/CH$_2$OH.CH$_2$OH = 4/1 | " | 180 | 120 | 660 | ca. 2 | 98 |
| 12 | H$_2$O | NaCOOH/ Na$_2$CO$_3$ = 1/1 | 160 | 60 60 | 660 | ca. 2 | 92 |

Aus der Tabelle ist zu ersehen, daß die erfindungsgemäßen Zubereitungen (Versuche 3 bis 12) sich durch eine erheblich bessere Lagerbeständigkeit auszeichnen. Im ungünstigsten Fall sind nach 3 Wochen Lagerzeit bei 20° C immer noch 92 % des anfänglich in der Zubereitung befindlichen Dithionits erhalten geblieben. Diese Werte können natürlich durch Lagerung bei tieferen Temperaturen noch weiter verbessert werden. Als Vergleich ist in Versuchen 1 und 2 jeweils eine Zubereitung aufgeführt, die nur Wasser bzw. zusätzlich das schwerer lösliche Natriumchlorid enthält. In beiden Fällen ist der Natriumdithionitgehalt auf 65 % bzw. 68 % abgesunken, woraus man ersieht, daß z. B. Natriumchlorid keine Wirkung zeigt.

### Patentansprüche

1. Stabilisierte, Wasser enthaltende alkalisch eingestellte Natriumdithionitzubereitungen, dadurch gekennzeichnet, daß die die Konsistenz einer pumpfähigen Paste aufweisenden Zubereitungen einen pH-Wert > 10, einen Natriumdithionitgehalt von 60 bis 70 Gew.% und einen Wassergehalt von 15 bis 30 Gew.% aufweisen, wobei der Gesamtgehalt an diesen beiden Komponenten in der Zubereitung maximal 90 Gew. % nicht überschreitet und daß die Zubereitungen ein in Wasser gelöstes, gegenüber Natriumdithionit inertes Natrium- und/oder Kaliumsalz enthalten, das eine Löslichkeit in Wasser von mindestens 500 g/l bei 20° C aufweist, mit der Maßgabe, daß die Hindestkonzentration des in Wasser gelösten Salzes 200 g/l beträgt.

2. Natriumdithionitzubereitungen nach Anspruch 1, dadurch gekennzeichnet, daß sie eine Viskosität von 0,1 bis 1500 Pa.s aufweisen.

3. Natriumdithionitzubereitungen nach Ansprüchen 1 bis 2, dadurch gekennzeichnet, daß sie als Natrium- und/oder Kaliumsalze Natriumformiat, Natriumacetat, das Natriumsalz der Oximethansulfinsäure, Kaliumcarbonat und/oder Kaliumsulfit enthalten.

4. Natriumdithionitzubereitungen nach Ansprüchen 1 bis 3, dadurch gekennzeichnet, daß die wäßrige Phase eine Mindestkonzentration an dem leicht löslichen Salz von 300 g/l aufweist.

5. Natriumdithionitzubereitungen nach Ansprüchen 1 bis 4, dadurch gekennzeichnet, daß die wäßrige Phase einen mit Wasser mischbaren Alkohol enthält.

### Claims

1. A stabilized water-containing sodium dithionite formulation which has been rendered alkaline, wherein the formulation has the consistency of a pumpable paste and pH > 10 and a sodium dithionite content of from 60 to 70 % by weight and a water content of from 15 to 30 % by weight, the total proportion of these two components in the formulation not exceeding a maximum of 90 % by weight contains a sodium salt and/or potassium salt which is inert to sodium dithionite and is dissolved in water and has a water-solubility greater

than 500 g/l at 20°C, with the proviso that the concentration of the salt dissolved in water is not less than 200 g/l.

2. A sodium dithionite formulation as claimed in claim 1, which has a viscosity of from 0.1 to 1,500 Pa.s.

3. A sodium dithionite formulation as claimed in claim 1 or 2, which contains, as sodium salts and/or potassium salts, sodium formate, sodium acetate, sodium hydroxy-methanesulfinate, potassium carbonate and/or potassium sulfite.

4. A sodium dithionite formulation as claimed in claim 1 or 2 or 3, wherein the concentration of the readily soluble salt in the aqueous phase is not less than 300 g/l.

5. A sodium dithionite formulation as claimed in claim 1 or 2 or 3 or 4, wherein the aqueous phase contains a water-miscible alcohol.

**Revendications**

1. Préparations de dithionite de sodium stabilisées, réglées alcalines, contenant de l'eau, caractérisées par le fait que les préparations, présentant la consistance d'une pâte apte au pompage, possèdent une valeur de pH © 10, une teneur en dithionite de sodium de 60 à 70 % en poids et une teneur en eau de 15 à 30 % en poids, la teneur totale en ces deux composants dans la préparation ne dépassant pas un maximum de 90 % en poids, et que les préparations contiennent un sel de sodium et/ou potassium, inerte vis-a-vis du dithionite de sodium, dissous dans l'eau et possédant une solubilité dans l'eau d'au moins 500 g/l à 20°C, avec la condition quela concentration minimale du sel dissous dans l'eau soit de 200 g/l.

2. Préparations de dithionite de sodium selon la revendication 1, caractérisées par le fait qu'elles possèdent une viscosité de 0,1 à 1500 Pa.s.

3. Préparations de dithionite de sodium selon les revendications 1 à 2, caractérisées par le fait qu'elles contiennent, comme sels de sodium et/ou de potassium, du formiate de sodium, de l'acétate de sodium, le sel de sodium de l'acide oxyméthanesulfinique, du carbonate de potassium et/ou du sulfite de potassium.

4. Préparations de dithionite de sodium selon les revendications 1 à 3, caractérisées par le fait que la phase aqueuse possède une concentration minimale en le sel facilement soluble de 300 g/l.

5. Préparations de dithionite de sodium selon les revendications 1 à 4, caractérisées par le fait que la phase aqueuse contient un alcool mélangeable avec l'eau.